# EUROPEAN PATENT APPLICATION

(11) **EP 4 478 440 A1**
(43) Date of publication of application: **18.12.2024**
(21) Application number: 22966830.6
(22) Date of filing: 30.11.2022
(51) Int. Cl.: H01M 4/13, H01M 4/139, H01M 10/0525

(54) **ELECTRODE AND MANUFACTURING METHOD THEREFOR, BATTERY, AND ELECTRICAL APPARATUS**

(71) Applicant: Contemporary Amperex Technology Co., Limited, Fujian 352100 (CN)
(72) Inventor: ZHENG, Wei, Ningde City, Fujian 352100 (CN); WU, Baozhen, Ningde City, Fujian 352100 (CN); WANG, Yuwen, Ningde City, Fujian 352100 (CN); YOU, Xingyan, Ningde City, Fujian 352100 (CN); BAI, Wenlong, Ningde City, Fujian 352100 (CN)
(74) Representative: von Tietzen und Hennig, Nikolaus
(86) International application number: PCT/CN2022/135503
(87) International publication number: WO 2024/113237

(57) **Abstract**

Disclosed are an electrode, a preparation method therefor, a battery, and a power consuming device. The electrode according to an embodiment of the present application comprises a current collector (10) and active layers (20) bonded to the current collector (10), wherein the active layers (20) include a first active layer (21) and a second active layer (22), the first active layer (21) is bonded to the current collector (10), the second active layer (22) is bonded to the surface of the first active layer (10) that faces away from the current collector (10), and the second active layer (22) has a porosity lager than that of the first active layer (21). Therefore, the electrode of the present application has a high energy density and structural stability and an excellent cycling performance, resulting in a safe battery. The method for preparing an electrode according to an embodiment of the present application can ensure that the prepared electrode has a stable structure and electrochemical performance, and a high efficiency, while saving the production cost. A secondary battery comprises the electrode of the present application.

## Description

### Technical Field

The present application relates to the technical field of batteries, and particularly to an electrode, a preparation method therefor, a battery, and a power consuming device.

### Background Art

Achieving energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

Moreover, with the increasing popularity of battery applications, the market has increasingly high requirements for battery related performance such as cycling performance; and with the market share of electric new energy vehicles increases gradually, the current requirements for endurance mileage are gradually increasing, while the requirements for charging rate are also increasing. However, the current electrode has a poor liquid-phase transport ability and fast-charging capability due to the structure of the active layers contained therein.

### Summary of the Invention

In view of the above problems, an embodiment of the present application provides an electrode and a preparation method therefor, a battery, and a power consuming device, so as to solve the technical problem of poor liquid-phase transport ability of an electrode.

In a first aspect, an embodiment of the present application provides an electrode. The electrode according to an embodiment of the present application comprises a current collector and active layers bonded to the current collector, wherein the active layers include a first active layer and a second active layer, the first active layer is bonded to the current collector, the second active layer is bonded to the surface of the first active layer that faces away from the current collector, and the second active layer has a porosity larger than that of the first active layer.

The electrode according to an embodiment of the present application comprises a second active layer, which effectively increases the contact area between the active layers and the electrolyte solution, and effectively enriches the migration channels and transport spaces for lithium ions, increases the transport rate of lithium ions, and improves the kinetic performance of lithium ion migration, such that the liquid-phase transport capability of the electrode according to an embodiment of the present application is significantly improved, thus improving the fast-charging capability of the electrode according to an embodiment of the present application; and moreover, the presence of the first active layer, by a combined action with the second active layer, enable the electrode according to an embodiment of the present application to have a high energy density, high structural stability and an excellent cycling performance, and can effectively avoid the occurrence of polarization and lithium precipitation, thus improving the safety of a battery.

In some embodiments, the porosity of the second active layer is more than 30% higher than that of the first active layer.

In some embodiments, the porosity of the second active layer is 40% - 95% higher than that of the first active layer.

Controlling the porosity difference between the two active layers in such a range can short the migration paths of lithium ions in the active layers contained in the electrode according to an embodiment of the present application and increase the transport spaces for lithium ions, thereby further improving the liquid-phase transport capability of the active layers and improving the fast-charging capability.

In some embodiments, the average of the porosity of the second active layer is 25% - 55%.

In some embodiments, the diameter of the pores contained in the second active layer is 5-20 µm.

The second active layer having a porosity and a diameter of pores in such a range enables the indirect control of the porosity of the first active layer and increases the synergistic effect between the two active layers, thus further improving the liquid-phase transport capability of the active layers 20 and improving the fast-charging capacity.

In some embodiments, in the second active layer, the porosity of the second active layer increases in gradient in the direction facing away from the surface of the current collector. Controlling the gradient distribution of porosity of the second active layer in this direction can further increase the migration rate and transport spaces for lithium ions towards the interior of the active layers.

In some embodiments, the total thickness of the first active layer and the second active layer is not less than 40 µm.

In some embodiments, the thickness of the second active layer is 10-60 µm.

Having a thickness in such a range can effectively increase the energy density of the active layer and enable the active layer to have a large porosity, which enables the control of the effective migration paths for lithium ions towards the interior of the active layer.

In some embodiments, the particle size Dv50 of an active material contained in the first active layer is larger than that of an active material contained in the second active layer.

In some embodiments, the active material contained in the second active layer comprises a first active material and a second active material, and the difference between the particle size Dv50 of the first active material and the particle size Dv50 of the second active material is more than 30%.

Controlling the particle size of the active materials contained in the second active layer and the first active layer results in a synergistic effect between the first active layer and the second active layer, thus increasing the energy density of an electrode.

In some embodiments, the first active layer and/or the second active layer comprise(s) the following components in contents by mass percentage:
80% - 97% of an active material;
1% - 10% of a conductive agent;
1% - 5% of a binder; and
1% - 5% of a dispersant.

The first active layer and the second active layer having components in such a range enable the active layers to have a high energy density and a small internal resistance.

In some embodiments, the electrode is a positive electrode, and the active material contained in the active layers is a positive electrode active material; or the electrode is a negative electrode, and the active material contained in the active layers is a negative electrode active material.

In an exemplary embodiment, the positive electrode active material includes at least one of lithium nickel cobalt manganate, lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and a modified compound thereof.

In an exemplary embodiment, the negative electrode active material includes at least one of synthetic graphite, natural graphite, soft carbon, hard carbon, a silicon-based material, a tin-based material and lithium titanate.

In an exemplary embodiment, the binder includes at least one of polyvinylidene fluoride, a benzene rubber, polyacrylic acid, sodium polyacrylate, polyacrylamide, polyvinyl alcohol, sodium alginate, polymethacrylic acid and carboxymethyl chitosan.

In an exemplary embodiment, the conductive agent includes at least one of acetylene black, superconducting carbon, carbon black, Ketjen black, carbon dots, carbon nanotubes, graphene, and carbon nanofibers.

In an exemplary embodiment, the dispersant includes sodium carboxymethyl cellulose.

These electrode active materials, binders, conductive agents and dispersants can have a synergistic effect, which improves the layered structure and the electronic conductivity of the active layers.

In some embodiments, the electrode is a negative electrode, and an active material contained in the second active layer includes amorphous carbon.

In a second aspect, an embodiment of the present application provides a method for preparing an electrode. The method for preparing an electrode according to an embodiment of the present application comprises the steps of
forming electrode active layers on a current collector; and
forming pores on a superficial electrode active layer of the electrode active layers that faces away from the current collector to form a porous structure in the superficial electrode active layer, thus enabling the porosity of the superficial electrode active layer to be larger than that of an internal electrode active layer close to the current collector.

For the preparation method of the present application, forming pores in the superficial electrode active layer of the electrode active layer enables the superficial electrode active layer to form a porous structure with abundant pores. Moreover, the porosity of the superficial electrode active layer is higher than that of the internal electrode active layer close to the current collector without a pore forming treatment, such that the prepared electrode is endowed with the properties of the electrode according to an embodiment of the present application above, for example, a large contact area with the electrolyte solution, and a high liquid-phase transport capability and fast-charging capability, and the prepared electrode has a high energy density, a stable structure, and an excellent cycling performance. In addition, the method for preparing an electrode according to an embodiment of the present application can ensure that the prepared electrode has a stable structure and electrochemical performance, have a high efficiency, while saving the production cost.

In some embodiments, the material of the superficial electrode active layer contains a pore-forming agent. A pore-forming agent is dispersed in the superficial electrode active layer, such that the pores are formed during the pore-forming treatment, thus forming a porous structure in the superficial electrode active layer.

In some embodiments, the content of the pore-forming agent in the superficial electrode active layer is such that the pore-forming agent accounts for 8 wt% - 20 wt% of the solid content of an active layer slurry forming the superficial electrode active layer. Controlling the content of the pore-forming agent in the superficial electrode active layer can adjust and control the morphology of the porous structure formed during the pore-forming treatment and the porosity.

In some embodiments, the thickness of the superficial electrode active layer is 10-60 µm.

In some embodiments, the pore-forming agent includes at least one of ammonium bicarbonate, ammonium carbonate, ammonium chloride, polymethyl methacrylate, starch, and polyvinylpyrrolidone. Such a pore-forming agents is thermal decomposable and therefore can be decomposed by means of an appropriate heat treatment.

In some embodiments, the pore-forming treatment is subjecting the superficial electrode active layer to a heat treatment to decompose the pore-forming agent. By means of heat treatment, the pore-forming agent can be decomposed in the superficial electrode active layer, thus forming a porous structure in the superficial electrode active layer in situ.

In some embodiments, the temperature of the heat treatment is 70°C - 150°C. The pore-forming agents above can be effectively decomposed at such a temperature, resulting in a porous structure with abundant pores in the superficial electrode active layer.

In some embodiments, the method for forming an electrode active layer on a current collector comprises the steps of
forming an internal electrode active layer on a current collector with a first electrode slurry; and
forming a wet film on the surface of the internal electrode active layer that faces away from the current collector with a second electrode slurry containing a pore-forming agent, followed by drying and rolling to form a superficial electrode active layer bonded to the internal electrode active layer.

By means of forming different active layers separately, the distribution of the pore-forming agent can be effectively controlled, and finally, the distribution depth, structure and uniformity of the porous structure in the active layers are controlled.

In some embodiments, the second electrode slurry consists of several parts, in which the content of the pore-forming agent increases in gradient, and the several parts of the second electrode slurry are used to successively form films on the surface of the internal electrode active layer in an order of the content of the pore-forming agent from low to high, so as to form the wet film. The second electrode slurry is provided with a pore forming agent at a gradient content, such that the content of the pore forming agent in the formed superficial electrode active layer varies in gradient.

In a third aspect, an embodiment of the present application provides a battery. The battery according to an embodiment of the present application comprises a positive electrode and a negative electrode, wherein the positive electrode is an electrode according to an embodiment of the present application above or an electrode prepared by the electrode preparation method according to an embodiment of the present application above, and the active material contained in the active layers of the electrode is a positive electrode material; and/or
the negative electrode is an electrode according to an embodiment of the present application above or an electrode prepared by the electrode preparation method according to an embodiment of the present application above, and the active material contained in the active layer of the electrode is a negative electrode material.

The battery according to an embodiment of the present application comprises an electrode according to an embodiment of the present application above; therefore, the battery according to an embodiment of the present application has a good cycling performance, can be fast charged and shows an enhanced fast-charging capability, and the safety performance of the battery is also improved.

In a third aspect, an embodiment of the present application provides a power consuming device. The power consuming device according to an embodiment of the present application comprises a battery according to an embodiment of the present application, which is configured to provide electric energy.

In this way, the power consuming device according to an embodiment of the present application comprises a battery according to an embodiment of the present application above; therefore, the power consuming device has a high endurance mileage, a fast-charging capacity, and a high safety.

The above description is only an overview of the technical solutions of the present application. In order to more clearly understand the technical means of the present application to implement same according to the contents of the description, and in order to make the above and other objectives, features and advantages of the present application more obvious and understandable, detailed description of embodiments of the present application is exemplarily described below.

### Brief Description of the Drawings

Various other advantages and benefits will become obvious to those of ordinary skill in the art upon reading the following detailed description of preferred implementations. Accompanying drawings are merely for the purpose of illustrating the preferred implementations and are not to be construed as limiting the present application. Moreover, like components are denoted by like reference numerals throughout the accompanying drawings. In the drawings:
Fig. 1 shows an electron microscope image of ion beam cross-section polishing (Cross section polisher, CP) of an existing electrode active layer;
Fig. 2 shows a schematic structure diagram of an electrode comprising active layers on one side according to an embodiment of the present application;
Fig. 3 shows a schematic structure diagram of an electrode comprising active layers on both sides according to an embodiment of the present application; and in Fig 3, figure A shows a schematic structure diagram of a pore structure, while figure B shows a schematic structure diagram of another pore structure;
Fig. 4 shows a schematic flow chart of a method for preparing an electrode according to an embodiment of the present application;
Fig. 5 shows a schematic structure diagram of an embodiment of a battery cell according to an embodiment of the present application;
Fig. 6 shows a schematic exploded diagram of the battery cell shown in Fig. 5;
Fig. 7 shows a schematic structure diagram of an embodiment of a battery module according to an embodiment of the present application;
Fig. 8 shows a schematic structure diagram of an embodiment of a battery pack according to an embodiment of the present application;
Fig. 9 shows a schematic exploded structure diagram of the battery pack shown in Fig. 8; and
Fig. 10 shows a schematic diagram of an embodiment of a power consuming device comprising a battery according to an embodiment of the present application as a power supply.

Reference signs in detailed description of embodiments:
10. current collector;
20. active layer, 21. first active layer, 22. second active layer;
30. battery cell, 31. housing, 32. electrode assembly, 33. cover plate;
40. battery module;
50. battery pack, 51. box body, 52. lower box body.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising/including" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term " and/or" is merely intended to describe the associated relationship of associated objects, indicating that three relationships can exist, for example, A and/or B can include: only A exists, both A and B exist, and only B exists. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the apparatus or element considered must have a particular orientation or be constructed and operated in a particular orientation, and therefore not to be construed as limiting the embodiments of the present application.

In the description of the embodiments of the present application, unless otherwise explicitly specified and defined, the technical terms such as "mount", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be internal communication between two elements or interaction between the two elements. For those of ordinary skill in the art, the specific meanings of the above terms in the embodiments of the present application can be understood according to specific situations.

In an embodiment of the present application, the active layer refers to an active layer contained in an electrode, comprises at least a structure of electrode active material and is bonded to a current collector.

The porosity refers to the percentage (%) of total pore volume in an active layer to the total volume of the active layer.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, market demand for the traction batteries is also expanding, and the requirements for the performance of traction batteries, such as a cycling performance, fast-charging capability and a high power, are also increasingly higher at the same time.

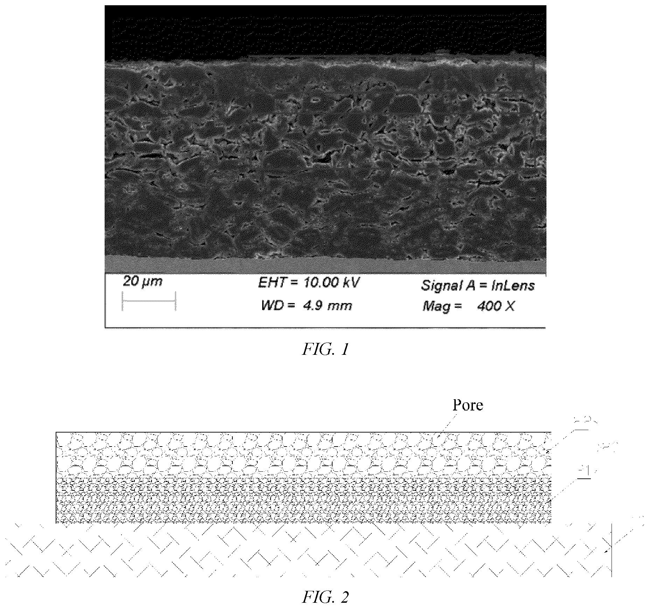

However, the existing electrode generally forms an active layer by forming a film using an electrode slurry on a current collector and then rolling same. In the study of the microstructure of an active layer, the inventors discovered that due to the rolling process, the surface of the active layer first comes into contact with a cold-pressing roller, leading to the occurrence of over-compaction of the surface of the electrode plate. As shown in Fig. 1, it can be seen from the CP electron microscope image of an electrode plate that the porosity in the superficial layer of the active layer deteriorates. The pore structure deterioration of the superficial layer leads to a poor liquid-phase transport capability thereof, for example, impeding the migration rate of lithium ions towards the interior of the active layer, including impeding the transport of lithium ions diffused from the positive electrode to the interior of the negative electrode plate, such that the lithium salt concentration gradient in the negative electrode thickness direction further deteriorates, thereby deteriorating the kinetic performance of electro-lithium ion migration and also leading to a poor fast-charging capability. Therefore, it is necessary to focus on alleviating such a problem.

Especially under a high current condition, for lithium ions in the electrolyte solution, their transport in the active layer contained in the existing electrode becomes the weakest link of lowest efficiency in the overall kinetic process. Such a problem is more sever especially for high loading electrodes, because the thickness or compacted density of the active layer thereof is relatively large, that is, the active layer thereof provides longer transport paths or smaller transport spaces (low porosity). In addition, since a low transport rate will result in a large lithium ion concentration gradient, leading to that the negative electrode side of the separator is more likely to lithium precipitation, thus increasing the risks of short circuits within a battery.

In order to solve the above problems of the existing electrode active layer, in some embodiments, an active layer contained in a thick electrode is subjected to a micro pore forming treatment, such as laser or mechanical pore forming. However, the inventors found that whether it is laser pore forming or mechanical pore forming, the pore is a vertical or approximately vertical pore channel distributed along the thickness direction of the electrode plate, which has an effect of improving the migration of lithium ions towards the interior of the active layer to a certain extent, with the effect being not obvious; moreover, their industrial processes are complex, greatly increasing the process cost; and meanwhile, the laser pore forming or the mechanical pore forming may damage the layered structure of an active layer and the structure of the active particles contained therein, leading to problems of powder shedding, performance deterioration, and poor cycling performance of the active layer.

In other embodiments, a powdery thermal decomposable additive is added additionally into an electrode slurry, and the prepared electrode slurry is coated onto a current collector to obtain a wet electrode plate for a lithium ion battery, which is then heated and dried to prepare a lithium ion battery electrode plate with a vertical pore structure. However, the inventors found that although the electrode has a vertical pore structure, the pores therein are formed in the thickness direction of the active layer, and therefore similar to the above electrodes formed by laser or laser pore forming, the formed electrode structure does not obviously improve the migration of lithium ions towards the interior of the active layer; and forming pores in an area close to the current collector results in a decrease in energy density of the electrode.

Based on the research with respect to the shortcomings of existing electrodes, the inventors further found that by improving the structure of an active layer, and specifically by improving the distribution of porosity in an active layer, the liquid-phase transport capability of the active layer contained in an electrode can be significantly improved, and the fast-charging capacity can be improved. Thus, the following electrodes and the preparation method therefor are proposed in order to significantly improve the effect of the electrode on the migration of lithium ions towards the interior of an active layer, ensure the high energy density and cycling performance of the electrode, and improve the fast-charging capacity simultaneously.

### Electrode

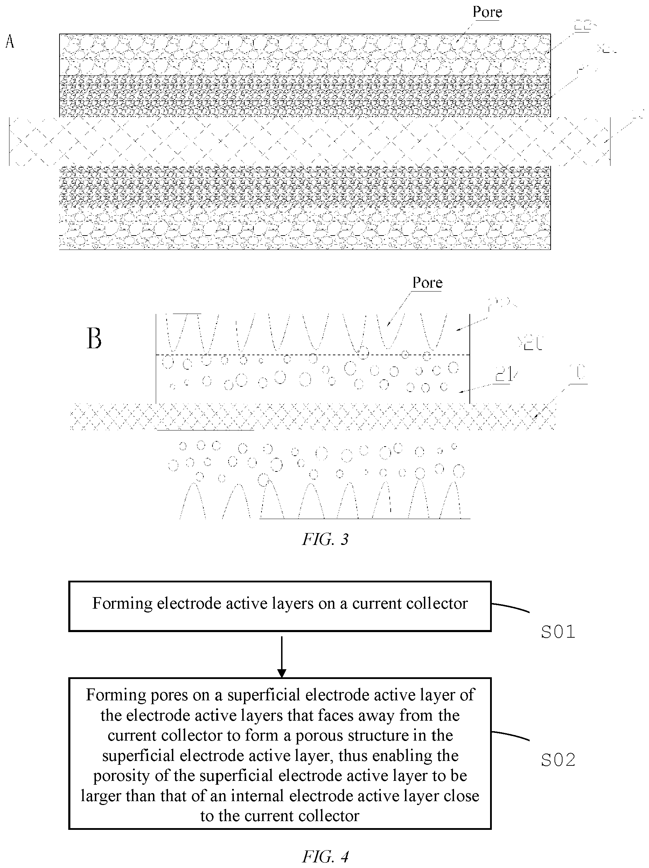

In a first aspect, an embodiment of the present application provides an electrode. With respect to Fig. 2 and Fig. 3, an electrode according to an embodiment of the present application comprises a current collector 10 and active layers 20 bonded to the current collector; wherein the active layers 20 comprise a first active layer 21 and a second active layer 22, the first active layer 21 is bonded to the current collector 10, the second active layer 22 is bonded to the surface of the first active layer 21 that faces away from the current collector 10, and the second active layer 22 has a porosity lager than that of the first active layer 21.

The first active layer 21 and the second active layer 22 together constitute the active layers 20 contained in the electrode according to an embodiment of the present application. According to the above stacking relationship of a second active layer 22, a first active layer 21 and a current collector 10, a second active layer 22, a first active layer 21 and a current collector 10 are stacked in sequence to form a sandwich structure. In addition, the active layers 20 may be bonded to a surface of the current collector 10, as shown in Fig. 2, and certainly, the active layers 20 may also be bonded to the opposite two surfaces of the current collector 10, as shown in Fig. 3.

The second active layer 22 contained in the electrode according to an embodiment of the present application has a porosity lager than that of the first active layer 21, and the second active layer 22 is provided at the outer surface layer of the active layers 20 contained in the electrode, such that the presence of the second active layer 22 and the bonding position thereof effectively increases the contact area between the active layers 20 and the electrolyte solution, and effectively enriches the migration channels and transport spaces for lithium ions, increases the transport rate of lithium ions, and improves the kinetic performance of lithium ion migration, which significantly improves the liquid-phase transport capability of the electrode according to an embodiment of the present application, thus improving the fast-charging capability of the electrode according to an embodiment of the present application; and the first active layer 21 has a porosity lower than that of the second active layer 22 above, such that the electrode has a high compacted density. Therefore, the combined action of the first active layer 21 and the second active layer 22 enables the electrode according to an embodiment of the present application to have a high energy density, a high structural stability and an excellent cycling performance, and can effectively avoid the occurrence of polarization and lithium precipitation, thus improving the safety of a battery. Moreover, the first active layer 21 is directly bonded to the current collector 10 and is provided inside the electrode; therefore, the first active layer 21 having a lower porosity will not affect the liquid-phase transport capability and the fast-charging capability of the electrode.

In some embodiments, the porosity of the second active layer 22 is more than 30% and further 40% - 95% higher than that of the first active layer 21, and the porosity difference may be specifically controlled to be more than 30%, 35%, 40%, 45%, 50%, 55%, 60%, 65%, 70%, 75%, 80%, 85%, 90%, 95%, etc., typically but without limitation. Controlling the porosity difference proportion of the second active layer 22 to the first active layer 21, for example in the ranges above, can short the migration paths of lithium ions in the active layers 20 contained in the electrode according to an embodiment of the present application and increase the transport spaces for lithium ions, thereby further improving the liquid-phase transport capability of the active layers 20 and improving the fast-charging capability.

In some embodiments, the average of the porosity of the second active layer 22 is 25% - 55%, and in an exemplary embodiment, the porosity may be 25%, 30%, 35%, 40%, 45%, 50%, 55%, etc., typically but without limitation. In other embodiments, the diameter of the pores contained in the second active layer 22 may be 5-20 µm, and further 10-15 µm, and in an exemplary embodiment, the diameter of the pores may be 5 µm, 8 µm, 10 µm, 12 µm, 15 µm, 17 µm, 20 µm etc., typically but without limitation. The second active layer 22 having a porosity and a diameter of pores in such a range enables the indirect control of the porosity of the second active layer 22 and increases the synergistic effect between the two active layers, thus further improving the liquid-phase transport capability of the active layers 20 and improving the fast-charging capacity.

In some embodiments, in the second active layer 22, the porosity of the second active layer 22 increases in gradient in the direction facing away from the surface of the current collector 10. That is to say, in the direction from the contact surface between the second active layer 22 and the first active layer 21 to a surface facing away from the first active layer 21, the porosity of the second active layer 22 increases in gradient, namely, the pores are more and more or the diameter of the pores increases gradually. Controlling the gradient distribution of porosity of the second active layer 22 in this direction can further increase the contact and infiltration area between the electrolyte solution and the active layers 20 and increase the migration rate and transport spaces for lithium ions towards the interior of the active layers 20, thus further improving the liquid-phase transport capability of the active layers 20 and further improving the fast-charging capability.

In some embodiments, the thickness of the second active layer 22 may be 10-60 µm, further 10-40 µm, and more further 15-25 µm, and in an exemplary embodiment, the thickness may be 10 µm, 15 µm, 20 µm, 25 µm, 30 µm, 35 µm, 40 µm, 45 µm, 50 µm, 55 µm, 60 µm, etc., typically but without limitation. The thickness in such a range enables the control of the effective migration paths for lithium ions towards the interior of the active layer 22, and can increase the energy density of the electrode according to an embodiment of the present application in combination with the first active layer 21.

Since the second active layer 22 is still an active layer structure, the material contained in the second active layer 22 in the embodiments above must contain an electrode active material. Certainly, a conductive agent and a binder can also be further comprised to ensure that the second active layer 22 has not only a high porosity, but also a high cycling performance and a low internal resistance.

In some embodiments, the pore structure in the second active layer 22 may be abundant three-dimensional pore structures as shown in figure A in Fig. 3, or may be a pore structure in which the opening of pores faces away from the first active layer 21, as shown in figure B in Fig. 3.

In some embodiments, the particle size Dv50 of an active material contained in the second active layer 22 in the embodiments above is smaller than that of an active material contained in the first active layer 21. As in an embodiment, the particle size Dv50 of an active material contained in the second active layer 22 is more than 30% smaller than that of an active material contained in the first active layer 21. Controlling the particle size of an active material contained in the second active layer 22 to be smaller than that of an active material contained in the first active layer 21 results in a synergistic effect between the first active layer 21 and the second active layer 22, which increases the energy density of an electrode and increases the abundant pore structures contained in the second active layer 22.

As in some embodiments, the second active layer 22 may comprise the following components in contents by mass percentage:
80% - 97% of an active material;
1% - 10% of a conductive agent;
1% - 5% of a binder; and
1% - 5% of a dispersant.

The second active layer 22 comprising the components in such a range, together with the first active layer 21, endowed the active layers 20 with a high energy density and a small internal resistance and can improve the stability of the porous structure in the second active layer 22, such that the cycling performance of the electrode according to an embodiment of the present application can be further improved and the internal resistance of the electrode is reduced.

In some embodiments, when the electrode according to an embodiment of the present application is a positive electrode, the active material contained in the second active layer 22 is a positive electrode active material; and in an exemplary embodiment, the positive electrode active material includes at least one of lithium nickel cobalt manganate, lithium cobalt oxide (e.g., LiCoO₂), lithium nickel oxide (e.g., LiNiO₂), lithium manganese oxide (e.g., LiMnO₂, and LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM333), LiNi_{0.5}Co_{0.2}Mn_{0.3}O₂ (NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), and LiNi_{0.8}Co_{0.1}Mn_{0.1}O₂ (NCM811), lithium nickel cobalt aluminum oxide (e.g., LiNi_{0.85}Co_{0.15}Al_{0.05}O₂), modified compounds thereof, and the like. Such a positive electrode active material has a high capacity and forms a second active layer 22 together with components such as a conductive agent, a binder, etc. The resulting second active layer has a stable layered structure and the porous structure contained therein is stable.

When the electrode according to an embodiment of the present application is a negative electrode, the active material contained in the second active layer 22 is a negative electrode active material. In an exemplary embodiment, the negative electrode active material may include at least one of carbon, a silicon-based material, a tin-based material and lithium titanate. Carbon may include at least one of natural graphite, synthetic graphite, soft carbon, and hard carbon; the silicon-based material may include at least one of elemental silicon, a silicon oxide, a silicon carbon composite, a silicon nitrogen composite, and a silicon alloy material; and the tin-based material may include the tin-based material may include at least one selected from elemental tin, a tin oxide, and a tin alloy material. Such a negative electrode active material has a high electronic conductivity and ionic conductivity and forms a second active layer 22 together with components such as a conductive agent, a binder, etc. The resulting second active layer has a stable layered structure and the porous structure contained therein is stable.

In some embodiments, when the electrode according to an embodiment of the present application is a positive electrode, the binder contained in the second active layer 22 at least one of polyvinylidene fluoride, polytetrafluoroethylene, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin; and when the electrode according to an embodiment of the present application is a negative electrode, the binder contained in the second active layer 22 may include at least one of a benzene rubber (SBR) (e.g., a butadiene styrene rubber), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS). Such a binder can improve the layered structure of the second active layer 22 and the stability of the porous structure contained therein.

In some embodiments, the conductive agent contained in the second active layer 22 includes at least one of acetylene black, superconducting carbon, carbon black, Ketjen black, carbon dots, carbon nanotubes, graphene, and carbon nanofibers. Such a conductive agent can be uniformly dispersed, which not only enables the second active layer 22 to have a high electronic conductivity, but also has a synergistic effect with components such as an active material, a binder, etc., thus improving the layered structure of the second active layer 22 and the stability of the porous structure contained therein.

In some embodiments, the dispersant contained in a second active layer 22 may be but is not limited to sodium carboxymethyl cellulose (CMC). Such a dispersant can effectively improve the uniform dispersion of materials contained in a second active layer 22, such that the layered structure of the second active layer 22 and the mechanical uniformity of the porous structure contained therein are improved, and the uniform distribution of pores contained in the porous structure can be improved.

In some embodiments, the bonding between a first active layer 21 and a second active layer 22 contained in the active layers 20 may be a in situ bonding formed by directly forming a film on the surface of the first active layer 21. In addition, the interface between the first active layer 21 and the second active layer 22 may be a transition layer formed by the respective layer materials, and the structuring of the two is achieved via the transition layer. Certainly, other forms of structural modes may also be used.

In some embodiments, the porosity of the first active layer 21 contained in active layers 20 is lower than that of the second active layer 22 above, for example, it may be more than 30% and further 40% - 95% lower than that of the second active layer 22. The porosity in such a range can further enable the first active layer 21 to have a relatively high compacted density, which improves the high energy density of the active layers 20 and enhances the bonding strength between the first active layer 21 and the current collector 10, thus improving the mechanical properties of the active layers 20.

In some embodiments, on the basis of the thickness of the second active layer 22 above, that is, on the basis that the above second active layer 22 has a thickness of 10-60 µm, the total thickness of the first active layer 21 and the second active layer 22 is controlled to be not less than 40 µm. Controlling the thickness of the first active layer 21 can effectively improve the energy density of active layers 20, and in combination with the thickness of the second active layer 22, the energy density of the electrode according to an embodiment of the present application can be improved, without affecting the liquid-phase transport capability of the active layers 20 and the fast-charging capability.

Since a first active layer 21 is a main structure contributing the energy density of active layers 20, the material contained in the first active layer 21 in the embodiments above must contain an electrode active material. Certainly, a conductive agent and a binder can also be further comprised to ensure that the first active layer 21 has not only a high compacted density, but also a high cycling performance and a low internal resistance.

In some embodiments, as described above for the second active layer 22, the particle size Dv50 of an active material contained in the first active layer 21 in the embodiments above is larger than that of an active material contained in the second active layer 22. As in an embodiment, the particle size Dv50 of an active material contained in the first active layer 21 is more than 30% larger than that of an active material contained in the second active layer 22. The particle size of an active material contained in the first active layer 21 is controlled to be larger than that of an active material contained in the second active layer 22, which increases the compacted density of the first active layer 21, thus increasing the energy density of an electrode.

As in some embodiments, the type or content of the components contained in a first active layer 21 may be the same as or different from that of the components contained in a second active layer 22. As in some embodiments, the first active layer 21 may comprise the following components in contents by mass percentage:
80% - 97% of an active material;
1% - 10% of a conductive agent;
1% - 5% of a binder; and
1% - 5% of a dispersant.

The first active layer 21 comprising the components in such a range, together with the second active layer 22, can further improve the energy density and cycling performance of the electrode according to an embodiment of the present application and reduce the internal resistance of the electrode.

Likewise, in some embodiments, when the electrode according to an embodiment of the present application is a positive electrode, the active material contained in the first active layer 21 is a positive electrode active material; and in an exemplary embodiment, the positive electrode active material includes at least one of lithium nickel cobalt manganate, lithium cobalt oxide (e.g., LiCoO₂), lithium nickel oxide (e.g., LiNiO₂), lithium manganese oxide (e.g., LiMnO₂, and LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM333), LiNi_{0.5}Co_{0.2}Mn_{0.3}O₂ (NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), and LiNi_{0.8}Co_{0.1}Mn_{0.1}O₂ (NCM811), lithium nickel cobalt aluminum oxide (e.g., LiNi_{0.85}Co_{0.15}Al_{0.05}O₂), modified compounds thereof, and the like. Such a positive electrode active material has a high capacity and forms a first active layer 21 together with components such as a conductive agent, a binder, etc. The resulting first active layer has a stable layered structure and a high compacted density. In this case, the positive electrode material contained in the first active layer 21 may be the same as or different from the positive electrode active material contained in the second active layer 22.

When the electrode according to an embodiment of the present application is a negative electrode, the active material contained in the first active layer 21 is a negative electrode active material. In an exemplary embodiment, the negative electrode active material may include at least one of carbon, a silicon-based material, a tin-based material and lithium titanate. Carbon may include at least one of natural graphite, synthetic graphite, soft carbon, and hard carbon; the silicon-based material may include at least one of elemental silicon, a silicon oxide, a silicon carbon composite, a silicon nitrogen composite, and a silicon alloy material; and the tin-based material may include the tin-based material may include at least one selected from elemental tin, a tin oxide, and a tin alloy material. Such a negative electrode active material has a high electronic conductivity and ionic conductivity and forms a first active layer 21 together with components such as a conductive agent, a binder, etc. The resulting first active layer has a stable layered structure and a high compacted density. In this case, the negative electrode material contained in the first active layer 21 may be the same as or different from the negative electrode active material contained in the second active layer 22.

When the first active layer 21 and the second active layer 22 comprise different electrode active materials respectively, ideally, the capacity of the electrode active material contained in the first active layer 21 is higher than that of the electrode active material contained in the second active layer 22, so as to improve the energy density of active layers 20.

As in an embodiment, when the electrode is a negative electrode, the active material contained in the second active layer 22 comprises amorphous carbon, and in this case, the active material contained in the first active layer 21 is free of amorphous carbon and may be other active materials having a high capacity, so as to achieve the different active materials of the two active layers and endow the electrode to with a high energy density.

It should be noted that the polarity of the electrode active materials contained in a first active layer 21 and a second active layer 22 is the same, that is, when the electrode is a positive electrode, the electrode active materials contained in the first active layer 21 and the second active layer 22 are both positive electrode active materials; and when the electrode is a negative electrode, the electrode active materials contained in the first active layer 21 and the second active layer 22 are both negative electrode active materials. In addition, the type and content of an active material contained in a first active layer 21 may be the same as or different from that of an active material contained in a second active layer 22.

In some embodiments, the binder contained in a first active layer 21 may include at least one of polyvinylidene fluoride, a benzene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS). Such a binder can improve the layered structure of the first active layer 21, and the type and content of the binder contained in a first active layer 21 may be the same as or different from those of the binder contained in a second active layer 22. The binder contained in a first active layer 21 may be the same as or different from the binder contained in a second active layer 22.

In some embodiments, the conductive agent contained in the first active layer 21 includes at least one of acetylene black, superconducting carbon, carbon black, Ketjen black, carbon dots, carbon nanotubes, graphene, and carbon nanofibers. Such a conductive agent can be uniformly dispersed and endows the first active layer 21 with a high electronic conductivity. The conductive agent contained in a first active layer 21 may be the same as or different from the conductive agent contained in a second active layer 22.

In some embodiments, the dispersant contained in a first active layer 21 may include but is not limited to sodium carboxymethyl cellulose (CMC). Such a dispersant can effectively improve the uniform dispersion of materials contained in a second active layer 22, such that the layered structure of the second active layer 22 and the mechanical uniformity of the porous structure contained therein are improved, and the uniform distribution of pores contained in the porous structure can be improved.

The current collector 10 contained in an electrode in the embodiments above may be adjusted according to the polarity of the electrode. For example, when the electrode according to an embodiment of the present application is a positive electrode, the current collector 10 may be a positive electrode current collector, and when the electrode according to an embodiment of the present application is a negative electrode, the current collector 10 may be a negative electrode current collector. The properties the current collector, such as thickness, can be adjusted according to the requirements of specific applications.

### Preparation of electrode

In a second aspect, an embodiment of the present application provides a method for preparing an electrode. As shown in Fig. 4, the method for preparing an electrode according to an embodiment of the present application comprises the steps of
S01: forming electrode active layers on a current collector; and
S02: forming pores on a superficial electrode active layer of the electrode active layers that faces away from the current collector to form a porous structure in the superficial electrode active layer, thus enabling the porosity of the superficial electrode active layer to be larger than that of an internal electrode active layer close to the current collector.

In step S01, the current collector may be the current collector 10 contained in the electrode according to an embodiment of the present application above, and the electrode active layer may be a pretreatment layer of active layers 20 contained in the electrode according to an embodiment of the present application above. In step S02, the superficial electrode active layer refers to the superficial portion of the electrode active layers in step S01 that faces away from the current collector, that is, in the direction parallel or approximately parallel to the surface of the current collector, the electrode active layers in step S01 include two portions, namely, an internal electrode active layer close to the current collector, and a superficial electrode active layer facing away from the current collector. After the pore-forming treatment in step S02, a porous structure is formed in the superficial electrode active layer of the electrode active layers, and then the superficial electrode active layer certainly has a porosity larger than that of the internal electrode active layer close to the current collector. Likewise, since only the superficial electrode active layer is formed with a porous structure, the thickness of the superficial electrode active layer is smaller than the total thickness of the electrode active layer. Therefore, after the pore-forming treatment in step S02, the superficial electrode active layer formed with a porous structure constitutes the second active layer 22 of the active layers 20 contained in the electrode according to an embodiment of the present application above, and the remaining internal electrode active layer that is not subjected to a pore-forming treatment and is close to the current collector constitutes the first active layer 21 of the active layers 20 contained in the electrode according to an embodiment of the present application above.

In this way, in the preparation method of the present application, forming pores in the superficial electrode active layer of the electrode active layer enables the superficial electrode active layer to form a porous structure with abundant pores. The internal electrode active layer without a pore-forming treatment does not have a porous structure. Therefore, the superficial electrode active layer from the pore-forming treatment has a porous structure with abundant pores and has a porosity higher than that of the internal electrode active layer close to the current collector and without a pore forming treatment. Since the superficial layer of the active layers contained in the prepared electrode has a porosity higher than that of the active layer close to the current collector, the prepared electrode is enabled to have the properties of the electrode according to an embodiment of the present application above, for example, a large contact area with the electrolyte solution, and a high liquid-phase transport capability and fast-charging capability, and the prepared electrode has a high energy density, a stable structure, and an excellent cycling performance. In addition, the method for preparing an electrode according to an embodiment of the present application can ensure that the prepared electrode has a stable structure and electrochemical performance, have a high efficiency, while saving the production cost.

Step S01:
the electrode active layers formed on the current collector are regarded as pretreatment layers of the active layers 20 contained in the electrode according to an embodiment of the present application above. Therefore, the electrode active layers comprise at least an electrode active material. As in some embodiments, the formed electrode active layers comprise the components contained in a first active layer 21 and a second active layer 20 in the active layers 20 above, such as an active material, a conductive agent, a binder, a dispersant, etc., at the same contents as above.

In addition, the thickness of the formed electrode active layers may be the total thickness of the active layers 20 above, for example, it may be the sum of the thickness of the first active layer 21 and the thickness of the second active layer 20, and the total thickness is not less than 40 µm. In an exemplary embodiment, the thickness of the internal electrode active layer described above may be the thickness of the first active layer 21 contained in the active layers 20 above; and for example, the thickness of the superficial electrode active layer described above may be the thickness of the second active layer 22 contained in the active layers 20 above, for example, it may be 10-60 µm.

In some embodiments, the superficial electrode active layer to be subjected to a pore-forming treatment in step S02 contains a pore-forming agent. A pore-forming agent is dispersed in the superficial electrode active layer, which forms pores during the pore-forming treatment in step S02, thus forming a porous structure in the superficial electrode active layer.

In some embodiments, the content of the pore-forming agent in the superficial electrode active layer may be such that the pore-forming agent accounts for 8 wt% - 20 wt% of the solid content of an active layer slurry forming the superficial electrode active layer. Controlling the content of the pore-forming agent in the superficial electrode active layer can adjust and control the morphology of the porous structure formed during the pore-forming treatment and the porosity. If the content of the pore-forming agent is controlled in the range above, the mechanical stability of the active layers formed from the pore-forming treatment can be improved, the porous structure has uniformly distributed and abundant pores, and the formed active layer has a relatively high porosity.

In an exemplary embodiment, the pore-forming agent includes at least one of ammonium bicarbonate, ammonium carbonate, ammonium chloride, polymethyl methacrylate, starch, and polyvinylpyrrolidone. Such a pore-forming agent is thermal decomposable and therefore can be decomposed by means of an appropriate heat treatment, thus allowing to form a structure of abundant pores without damaging the mechanical properties and structure of the superficial electrode active layer. Moreover, the slurry formed by mixing such a pore-forming agent and an active material has a good dispersibility and high stability and can avoid forming a gel. For example, after mixing such a pore-forming agent with a silicon-based material, the resulting slurry can have an improved dispersibility and stability, avoid the formation of a gel, and have an improved film-forming ability.

In some embodiments, the method for forming an electrode active layer on a current collector in step S01 comprises the steps of
S011: forming an internal electrode active layer on a current collector with a first electrode slurry; and
S012: forming a wet film on the surface of the internal electrode active layer that faces away from the current collector with a second electrode slurry containing a pore-forming agent, followed by drying and rolling to form a superficial electrode active layer bonded to the internal electrode active layer.

The first electrode slurry in step S011 may comprise the components contained in a first active layer 21 in the active layers 20 contained in the electrode according to an embodiment of the present application above and is prepared by mixing same with a solvent. Certainly, the electrode slurry may also be those containing other components. Compared with the second electrode slurry in step S012, the first electrode slurry is free of a pore-forming agent, so as to ensured that the internal electrode active layer maintains a low porosity and a high dense degree during the pore forming treatment in step S02 above. The thickness of the internal electrode active layer may be controlled and adjusted according to the thickness of the first active layer 21 in the active layers 20 contained in the electrode according to an embodiment of the present application above. An existing method of using an electrode slurry to form a film on a current collector can be used to form an internal electrode active layer on a current collector with a first electrode slurry.

The second electrode slurry in step S012 may comprise the components contained in a second active layer 22 in the active layers 20 contained in the electrode of the present application above and is prepared by mixing same with a solvent. Certainly, the electrode slurry may also be those containing other components. Compared with the first electrode slurry in step S011, the second electrode slurry comprises a pore-forming agent, so as to ensured that the superficial electrode active layer can form a porous structure during the pore-forming treatment in step S02 above. The thickness of the superficial electrode active layer may be controlled and adjusted according to the thickness of the second active layer 22 in the active layers 20 contained in the electrode according to an embodiment of the present application above. An existing method of using an electrode slurry to form a film on a current collector can be used to form a superficial electrode active layer on an internal electrode active layer with a second electrode slurry.

In addition, forming a film on the surface of an internal electrode active layer using a second electrode slurry may be directly forming a film on the surface of an internal electrode active layer when the internal electrode active layer is a wet film, or forming a film on the surface of an internal electrode active layer after the internal electrode active layer is dried first.

In some embodiments, the second electrode slurry can be prepared into several parts and the content of the pore-forming agent in each part is controlled to vary, for example, increasing in gradient. In this way, when the several parts of the second electrode slurry are used to form films on the surface of an internal electrode active layer, films can be formed in an order of the content of the pore-forming agent from low to high successively. Thus, in the formed superficial electrode active layer, the content of the pore-forming agent increases in gradient in the direction from the internal electrode active layer to the superficial electrode active layer. Thus, during the pore-forming treatment in step S02, the superficial electrode active layer can form a porous structure, which has a porosity increasing in gradient in the direction from the internal electrode active layer to the superficial electrode active layer.

The drying in step S012 mainly aims to dry a wet film, but it should be ensured that the pore-forming agent is not damaged. Therefore, the drying can be carried out below the thermal decomposition temperature of the pore-forming agent mentioned above. For example, the drying is carried out at a temperature lower than the heat treatment temperature below, i.e., 70°C-150°C, and in an exemplary embodiment, the temperature of drying may be 60-90°C.

The rolling in step S012 aims to improve the compacted density and corresponding mechanical properties of the electrode active layers consisting of an internal electrode active layer formed on a current collector and a superficial electrode active layer.

Step S02:
forming pores on the superficial electrode active layer aims to enable the superficial electrode active layer to form a porous structure, to have a relatively large porosity, for example, to form a porosity larger than that of an internal electrode active layer. After the pore-forming treatment, the superficial electrode active layer forms the second active layer 22 of the active layers 20 contained in the electrode according to an embodiment of the present application above, and the internal electrode active layer constitutes the first active layer 21 of the active layers 20 contained in the electrode according to an embodiment of the present application above. Moreover, the electrode active layers comprising an internal electrode active layer and a superficial electrode active layer are formed first, which can ensure the stability of the porous structure formed during pore-forming treatment in step S02. For example, it can avoid the undesirable porosity deterioration caused by the over-compaction on the surface of the active layers due to a process of pore-forming treatment first followed by rolling. When the superficial electrode active layer contains a pore-forming agent and the pore-forming agent is decomposed by a heat treatment as follows, an electrode active layer is first formed on the surface of a current collector according to the method for preparing an electrode active layer, including drying and rolling; and then the formed electrode active layer is subjected to a heat treatment to decompose the pore-forming agent to form a porous structure, thereby ensuring the stability of the porous structure and effectively avoiding the undesirable porosity deterioration caused by the over-compaction on the surface of the active layer due to a process of pore-forming treatment first followed by rolling.

In some embodiments, when the formed superficial electrode active layer contains a pore-forming agent, in an exemplary embodiment, the pore-forming agent is at least one of ammonium bicarbonate, ammonium carbonate, ammonium chloride, polymethyl methacrylate, starch and polyvinylpyrrolidone in step S01 above, and the pore-forming treatment is subjecting the superficial electrode active layer to a heat treatment to decompose the pore-forming agent. Since the pore-forming agent is decomposed in the superficial electrode active layer, a porous structure is formed in the superficial electrode active layer in situ, thus resulting in a porosity higher than that of the internal electrode active layer.

In an embodiment, the temperature of the heat treatment above is 70°C - 150°C, and further may be 100°C - 150°C. The pore-forming agent above can be effectively decomposed at such a temperature, resulting in a porous structure with abundant pores in the superficial electrode active layer and improving the mechanical properties of the active layer formed from a heat treatment. In addition, the temperature of the heat treatment can be controlled based on the decomposition temperature characteristics of the specific pore-forming agent. In addition, the heating rate of the heat treatment can also be controlled to ensure that the superficial electrode active layer has an abundant pore expanding structure and high mechanical properties, so as to reduce adverse effects such as decreased mechanical properties of the superficial electrode active layer caused during the heat treatment, i.e., during the decomposition of the pore-forming agent.

### Battery

In a third aspect, an embodiment of the present application provides a battery. The battery according to an embodiment of the present application comprises a positive electrode and a negative electrode, wherein at least one electrode plate of the positive electrode and the negative electrode is the electrode according to an embodiment of the present application above. For example, if the positive electrode is the electrode according to an embodiment of the present application above, the electrode is a positive electrode, and the active layers 20 contained therein are positive electrode active layers. When the negative electrode is the electrode according to an embodiment of the present application above, the electrode is a negative electrode, and the active layers 20 contained therein are negative electrode active layers.

In this way, since the battery according to an embodiment of the present application comprises the electrode according to an embodiment of the present application above, the battery according to an embodiment of the present application has a good cycling performance, can be fast charged and shows a strong fast-charging capability, and the safety performance of the battery is also improved.

In an exemplary embodiment, the battery according to an embodiment of the present application can be a secondary battery. When the battery according to an embodiment of the present application is a secondary battery, it comprises a positive electrode, a separator and a negative electrode. That is, at least one electrode plate of the positive electrode and negative electrode contained in the secondary battery may be the electrode according to an embodiment of the present application above.

In an embodiment, the battery according to an embodiment of the present application may include any one of a battery cell, a battery module, and a battery pack.

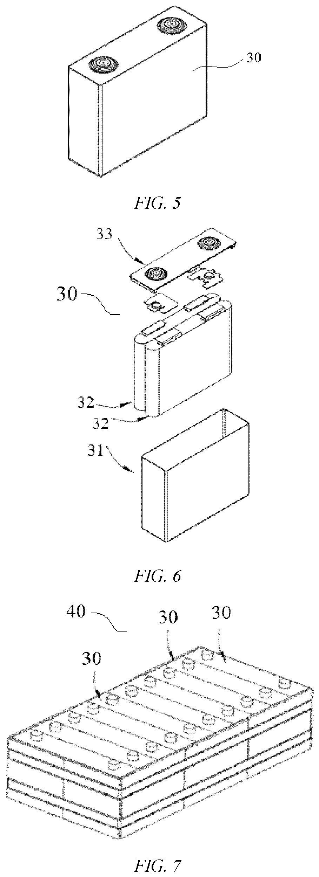

The battery cell refers to one comprising a battery housing and a cell packaged in the battery housing. The shape of the battery cell is not particularly limited in the present application, and may be cylindrical, square, or in any other shape. For example, Fig. 5 shows a battery cell 30 with a square structure as an example.

In some embodiments, as shown in Fig. 6, the outer package of the battery cell 30 may comprise a housing 31 and a cover plate 33. The housing 31 may comprise a bottom plate and side plates connected to the bottom plate, and the bottom plate and the side plates are enclosed to form an accommodating cavity. The housing 31 has an opening in communication with the accommodating cavity, and the cover plate 33 is used for covering the opening to close the accommodating cavity. An electrode assembly 32 may be formed from the positive electrode plate, the negative electrode plate, and the separator by a winding process and/or a laminating process. The electrode assembly 32 is packaged in the accommodating cavity. The electrolyte solution infiltrates the electrode assembly 32. The number of the electrode assemblies 32 contained in the battery cell 30 may be one or more and can be adjusted according to actual requirements.

The method for preparing a battery cell 30 is well-known. In some embodiments, the positive electrode, the separator, the negative electrode, and the electrolyte solution may be assembled to form a battery cell 30. By way of example, the positive electrode, the separator, and the negative electrode may be formed into an electrode assembly 32 by a winding process or a stacking process, the electrode assembly 32 is placed in an outer package and dried, and an electrolyte solution is then injected, followed by procedures such as vacuum packaging, standing, forming, and shaping to obtain a battery cell 30.

In some embodiments of the present application, the battery cell 30 according to the present application may be assembled into a battery module, the number of the battery cells 30 contained in the battery module may be multiple, and the specific number may be adjusted according to the application and capacity of the battery module.

Fig. 7 shows a schematic diagram of a battery module 40 as an example. As shown in Fig. 7, in the battery module 40, a plurality of battery cells 30 may be arranged in sequence in the length direction of the battery module 40. Apparently, the secondary batteries may also be arranged in any other manner. Furthermore, the plurality of battery cells 30 may be fixed by fasteners.

Optionally, the battery module 40 may further comprise a housing having an accommodating space, and the plurality of battery cells 30 are accommodated in the accommodating space.

In some embodiments, the above battery module 40 may also be assembled into a battery pack, and the number of the battery modules 40 contained in the battery pack may be adjusted according to the application and capacity of the battery pack.

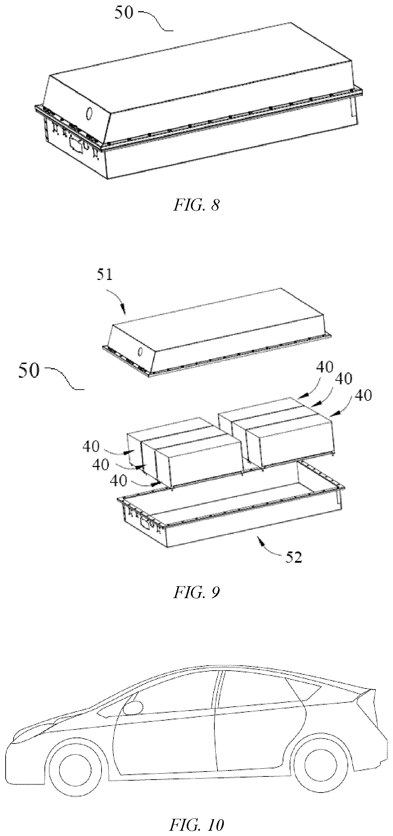

Figs. 8 and 9 show a schematic diagram of a battery pack 50 as an example. As shown in Figs. 8 and 9, the battery pack 50 may comprise a battery box and a plurality of battery modules 40 arranged in the battery box. The battery box comprises an upper box body 51 and a lower box body 52, and the upper box body 51 is used to cover the lower box body 52 to form a closed space for accommodating the battery modules 40. A plurality of battery modules 40 may be arranged in the battery box in any manner.

### Power consuming device

In a fourth aspect, an embodiment of the present application further provides a power consuming device, comprising the battery according to an embodiment of the present application above, and for example, one or more of a secondary battery, a battery module, or a battery pack. The secondary battery, the battery module or the battery pack may be used as a power supply or an energy storage unit of the power consuming device. The power consuming device may be, but is not limited to, a mobile apparatus (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf vehicle, an electric truck, etc.), an electric train, a ship, a satellite, an energy storage system, etc. A secondary battery, battery module or battery pack may be used for the power consuming device according to the usage requirements thereof.

Fig. 10 shows a schematic diagram of a power consuming device as an example. The power consuming device may be a pure electric vehicle, a hybrid electric vehicle, a plug-in hybrid electric vehicle, etc. In order to meet the requirements of the power consuming device for a high power and a high energy density, a battery pack or battery module may be used.

As another example, the power consuming device may be a mobile phone, a tablet computer, a laptop computer, etc. The power consuming device is generally required to be thin and light, and may have a secondary battery used as a power supply.

### Examples

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product instructions. The reagents or instruments used therein on which no manufacturers are specified are all commercially available conventional products.

### 1. Examples of electrode

### Example A1

In this example, provided was a negative electrode plate comprising a current collector of copper foil, a first active layer bonded to the current collector of a copper foil, and a second active layer bonded to the surface of the first active layer that faced away from the current collector of a copper foil. The second active layer had a porous structure, and the parameters such as the porosity and thickness of the second active layer were shown in Table 1 below, respectively.

In this example, the method for preparing a negative electrode plate comprised the steps as follows:
S1. Preparation of a first negative electrode slurry and a second negative electrode slurry:
   Preparation of a first negative electrode slurry: a negative electrode active material of synthetic graphite, a negative electrode active material of synthetic graphite, a conductive agent of acetylene black, a binder of a styrene butadiene rubber (SBR), and a thickening agent of sodium carboxymethyl cellulose (CMC-Na) were dissolved into a solvent of deionized water at a weight ratio of 48 : 48 : 1 : 2 : 1 to prepare the first negative electrode slurry; and
   preparation of a second negative electrode slurry: according to the method for preparing the first negative electrode slurry, a negative electrode active material of synthetic graphite, a conductive agent of acetylene black, a binder of a styrene butadiene rubber (SBR), and a thickening agent of sodium carboxymethyl cellulose (CMC-Na) were dissolved into a solvent of deionized water at the ratio, and a pore-forming agent of ammonium bicarbonate pore-forming agent was added simultaneously to prepare the second negative electrode slurry, with the ammonium bicarbonate being controlled to be 12% of the solid content of the negative electrode slurry; and
S2. forming electrode active layers on a current collector:
   first, an internal electrode active layer was formed on a current collector of a copper foil with the first negative electrode slurry in step S1; then the second negative electrode slurry was subjected to film forming to form a wet film on the outer surface of the internal electrode active layer, and then the wet film was dried at 70°C, followed by cold pressing, such that composite electrode active layers of an internal electrode active layer (a first active layer) and an outer electrode active layer bonded, in stack, to the internal electrode active layer were successively formed on the current collector; and
S3. pore forming treatment of the outer electrode active layer contained in the electrode active layers:
   the negative electrode semi-finished product prepared in step S2 was heated to 100°C at a temperature increase rate, such that the pore-forming agent of ammonium bicarbonate contained in the outer electrode active layer was decomposed gradually and formed a porous structure in the outer electrode active layer, thus the outer electrode active layer forming a second active layer having a porous structure.

### Examples A2 - A14

A negative electrode plate was provided in each of examples A2 - A14, and all the negative electrode plates had the same structure as that in example A1, except that the porosity and thickness of the second active layer contained in the negative electrode plates were different, and the parameters of the porosity and thickness of the second active layer contained in the negative electrode plates in the examples were shown in Table 1 below, respectively.

The methods for preparing a negative electrode plate in examples A2 - A14 also followed the method for preparing a negative electrode plate in example A1, except that the type and content of the pore-forming agent contained in the second negative electrode slurry were controlled to be different.

### Comparative example A1

In this comparative example, provided was a negative electrode plate comprising a current collector of a copper foil, and an active layer bonded to the current collector of a copper foil. The type and content of the materials contained in the active layer were the same as those of the materials contained in the first active layer in example A1.

In this comparative example, the method for preparing a negative electrode plate comprised the steps as follows:
S1. Preparation of a negative electrode slurry: a first negative electrode slurry was prepared according to step S1 of example A1; and
S2. preparation of a negative electrode slurry: a film was formed according to step S2 of example A1, except that in step S2 of this comparative example, the second negative electrode slurry in step S2 of example A1 was replaced with the first negative electrode slurry, that is, only the first negative electrode slurry free of a pore-forming agent was used during the film-forming treatment in step S2, followed by drying at 70°C and then clod pressing, so as to obtain the negative electrode substrate plate.

### Comparative example A2

In this comparative example, provided was a negative electrode plate comprising a current collector of a copper foil, and an active layer bonded to the current collector of a copper foil. The type and content of the materials contained in the active layer were the same as those of the materials contained in the active layer in comparative example A1. The difference was that the porosity of the active layer contained in the negative electrode plate of this comparative example was controlled by 1% on average, that is, there was no porosity difference in the active layer contained in the negative electrode plate of this comparative example.

### 2. Examples of secondary battery

### Examples B1 - B14 and comparative examples B1 - B2

A secondary battery was provided in each of examples B1 - B14 and comparative examples B1 - B2, and each secondary battery included a cell formed by a positive electrode plate, a separator and a negative electrode plate, and further included an electrolyte solution.

The positive electrode plate was prepared according to the method as follows:
a positive electrode active material of lithium nickel cobalt manganate (NCM523, i.e., LiNi_{0.5}Co_{0.2}Mn_{0.3}O₂), a binder of polyvinylidene fluoride, and a conductive agent of acetylene black were mixed at a weight ratio of 96 : 2 : 2, N-methylpyrrolidone (NMP) was then added as a solvent, and the mixture was stirred under the action of a vacuum stirrer until the system was homogeneous to obtain a positive electrode slurry with a solid content of 75 wt%; and the positive electrode slurry was uniformly coated onto an aluminum foil having a thickness of 13 µm at a coating density of 13.7 mg/cm², followed by drying, cold pressing and slitting to obtain the positive electrode plate in the example.

Negative electrode plate: the negative electrode plates were those provided in examples A1 - A14 and comparative examples A1 - A2 above, respectively.

Electrolyte solution: in an argon atmosphere glove box (H₂O < 0.1 ppm, O₂ < 0.1 ppm), an organic solvent of ethylene carbonate (EC)/ethyl methyl carbonate (EMC) were mixed uniformly at a volume ratio of 3/7, and 12.5 wt% (based on the weight of the solvents of ethylene carbonate/ethyl methyl carbonate) of LiPF₆ was dissolved in the above organic solvents and stirred uniformly to obtain the electrolyte solution.

Separator: A commercially available PP-PE copolymer microporous film having a thickness of 20 µm and an average pore size of 80 nm was used.

Assembling of secondary battery: The positive electrode plate, the separator and the negative electrode plate were stacked in sequence to form a cell, the bare cell was placed in an outer package, and the electrolyte solution described above was injected, followed by packaging to obtain a secondary battery. The secondary battery of example B 1 included a negative electrode plate provided in example A1 above, the secondary battery of example B2 included a negative electrode plate provided in example A2 above, and the secondary battery of comparative example B1 included a negative electrode plate provided in comparative example A1 above, by analogy.

### Tests of electrode and secondary battery related data

The electrodes and secondary batteries of the examples and comparative examples were tested for the relevant items as shown in Table 1 below, respectively, and the test results were shown in Table 1 below:
Test method for fast-charging cycling life/number of cycles at 25°C: at 25°C, the secondary batteries were respectively charged at a rate of 0.5 C, discharged at a rate of 1 C and were subjected to a continuous cycle test in a state of charge (SOC) interval of 3% - 97% until the capacity of the secondary batteries was less than 80% of the initial capacity, and the number of cycles was recorded as the cycling performance.

Other performance in Table 1 was determined according to the national standards or industry standards.

**Table 1**

| Examples | Electrode | | | | | | Secondary battery | |
|---|---|---|---|---|---|---|---|---|
| | Pore formi ng of cathod e and anode | Type of pore-forming agent and solid content thereof in second negative electrode slurry (wt%) | Thickne ss of second active layer /µm | Proporti on of porosity increase in second active layer compare d to first active layer (%) | Bonding force of positive electrode plate /Nm⁻¹ (based on comparati ve example of 100) | Bonding force of negative electrode plate /Nm-1 (based on comparati ve example of 100) | Fast-charging cycling life/num ber of cycles at 25°C | Charging time in 15% - 80% SOC at 35°C /min (based on comparati ve example of 100) |
| Example B1 | √ | Ammoni um bicarbona te 12% | 15 | 80% | 99 | 99 | 1792 | 95.5 |
| Example B2 | √ | Ammoni um carbonate 12% | 20 | 80% | 98.5 | 98.5 | 1802 | 95 |
| Example B3 | √ | Ammoni um chloride 12% | 25 | 80% | 98.3 | 98.3 | 1818 | 93 |
| Example B4 | √ | Ammoni um bicarbona te 12% | 30 | 80% | 98.1 | 98.1 | 1721 | 92 |
| Example B5 | √ | Ammoni um bicarbona te 16% | 40 | 80% | 98 | 98 | 1701 | 91 |
| Example B6 | √ | Ammoni um bicarbona te 8% | 20 | 20% | 99.7 | 99.7 | 1580 | 98 |
| Example B7 | √ | Ammoni um bicarbona te 8% | 20 | 40% | 99.5 | 99.5 | 1750 | 96 |
| Example B8 | √ | Ammoni um bicarbona te 13% | 20 | 50% | 99.3 | 99.3 | 1787 | 94 |
| Example B9 | √ | um bicarbona te 18% | 20 | 75% | 99 | 99 | 1800 | 92 |
| Example B10 | √ | Ammoni um bicarbona te 20% | 20 | 85% | 98.8 | 98.8 | 1804 | 90 |
| Example B11 | √ | Ammoni um bicarbona te 12% | 10 | 80% | 99.4 | 99.4 | 1620 | 98 |
| Example B12 | √ | Ammoni um bicarbona te 12% | 50 | 80% | 97.3 | 97.3 | 1570 | 94 |
| Example B13 | √ | Ammoni um bicarbona te 2% | 20 | 10% | 99.9 | 99.9 | 1531 | 99 |
| Example B14 | √ | Ammoni um bicarbona te 46% | 20 | 95% | 97 | 97 | 1550 | 90 |
| Comparati ve example B1 | × | \ | 20 | Porosity of superfici al layer being about 10% less than that of internal layer (-10%) | 100 | 100 | 1500 | 100 |
| Comparati ve example B2 | √ | Ammoni um bicarbona te 1% | 20 | 0% | 99.7 | 99.7 | 1511 | 99 |

As could be seen from Table 1, enabling the second active layer contained in an electrode according to an embodiment of the present application to have a porous structure and controlling and adjusting the porosity thereof could effectively increase and enrich the migration channels and transport spaces for lithium ions, increase the transport rate of lithium ions, and improve the kinetic performance of lithium ion migration, which effectively improved the cycling performance while maintaining the low porosity of the first active layer, such that a high compacted density of the electrode active layers could be effectively improved and the capacity of the electrode was improved.

Comparing examples A1 - A10 and examples A13 and A14 with examples A11 and A12, controlling the thickness of the second active layer contained in an electrode also had an effect on the cycling performance of the electrode to a certain extent, for example, either a too low (example A11) or too high (example A12) thickness would affect the cycling performance of the electrode; and nevertheless, all the electrodes provided in the examples of the present application had a cycling performance significantly higher than that of the electrode in comparative example A1.

Comparing examples A1 - A12 with examples A13 and A14, controlling the porosity ratio between the second active layer and the first active layer contained in an electrode also had an effect on the cycling performance of the electrode to a certain extent, for example, either a too low (example A13) or too high (example A14) porosity ratio would affect the cycling performance of the electrode; and nevertheless, all the electrodes provided in the examples of the present application had a cycling performance significantly higher than that of the electrode in comparative example A1. Compared with a secondary battery containing the electrode of comparative example A1, the secondary battery containing the electrode of comparative example A2 had an improved cycling performance and fast-charging performance, but the improvement was not obvious, and it was further determined that the energy density thereof was lower than the secondary battery containing the electrode of comparative example A1.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and such modifications or substitutions do not make the essence of the corresponding technical solution depart from the scope of the technical solutions of the embodiments of the present application, and should fall within the scope of the claims and the description of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. An electrode comprising a current collector and active layers bonded to the current collector, **characterized in that** the active layers include a first active layer and a second active layer, the first active layer is bonded to the current collector, the second active layer is bonded to the surface of the first active layer that faces away from the current collector, and the second active layer has a porosity larger than that of the first active layer.

2. The electrode according to claim 1, **characterized in that** the porosity of the second active layer is more than 30% higher than that of the first active layer.

3. The electrode according to claim 1 or 2, **characterized in that** the porosity of the second active layer is 40% - 95% higher than that of the first active layer; and/or
the average of the porosity of the second active layer is 25% - 55%; and/or
the diameter of the pores contained in the second active layer is 5-20 µm.

4. The electrode according to any one of claims 1-3, **characterized in that** in the second active layer, the porosity of the second active layer increases in gradient in the direction facing away from the surface of the current collector.

5. The electrode according to any one of claims 1-4, **characterized in that** the total thickness of the first active layer and the second active layer is not less than 40µm; and/or
the thickness of the second active layer is 10-60 µm; and/or
the particle size Dv50 of an active material contained in the first active layer is larger than that of an active material contained in the second active layer.

6. The electrode according to claims 1-5, **characterized in that** the active material contained in the second active layer comprises a first active material and a second active material, and the difference between the particle size Dv50 of the first active material and the particle size Dv50 of the second active material is more than 30%.

7. The electrode according to any one of claims 1-6, **characterized in that** the first active layer and/or the second active layer comprise(s) the following components by mass percentage:
80% - 97% of an active material;
1% - 10% of a conductive agent;
1% - 5% of a binder; and
1% - 5% of a dispersant.

8. The electrode according to claim 7, **characterized in that** the electrode is a positive electrode, and the active material contained in the active layers is a positive electrode active material; or
the electrode is a negative electrode, and the active material contained in the active layers is a negative electrode active material.

9. The electrode according to claim 8, **characterized in that** the positive electrode active material includes at least one of lithium nickel cobalt manganate, lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and a modified compound thereof; and/or
the negative electrode active material includes at least one of synthetic graphite, natural graphite, soft carbon, hard carbon, a silicon-based material, a tin-based material and lithium titanate; and/or
the binder includes at least one of polyvinylidene fluoride, a benzene rubber, polyacrylic acid, sodium polyacrylate, polyacrylamide, polyvinyl alcohol, sodium alginate, polymethacrylic acid and carboxymethyl chitosan; and/or
the conductive agent includes at least one of acetylene black, superconducting carbon, carbon black, Ketjen black, carbon dots, carbon nanotubes, graphene, and carbon nanofibers; and/or
the dispersant includes sodium carboxymethyl cellulose.

10. The electrode according to claim 8 or 9, **characterized in that** the electrode is a negative electrode, and an active material contained in the second active layer includes amorphous carbon.

11. A method for preparing an electrode, comprising the steps of
forming electrode active layers on a current collector; and
forming pores on a superficial electrode active layer of the electrode active layers that faces away from the current collector to form a porous structure in the superficial electrode active layer, thus enabling the porosity of the superficial electrode active layer to be larger than that of an internal electrode active layer close to the current collector.

12. The preparation method according to claim 11, **characterized in that** the material of the superficial electrode active layer contains a pore-forming agent.

13. The preparation method according to claim 12, **characterized in that** the pore-forming agent accounts for 8 wt% - 20 wt% of the solid content of an active layer slurry forming the superficial electrode active layer; and/or
the superficial electrode active layer has a thickness of 10-60 µm; and/or
the pore-forming agent includes at least one of ammonium bicarbonate, ammonium carbonate, ammonium chloride, polymethyl methacrylate, starch, and polyvinylpyrrolidone.

14. The preparation method according to claim 12 or 13, **characterized in that** the pore forming is subjecting the superficial electrode active layer to a heat treatment to decompose the pore-forming agent.

15. The preparation method according to any one of claims 12-14, **characterized in that** the temperature of the heat treatment is 70°C - 150°C.

16. The preparation method according to any one of claims 13-15, **characterized in that** the method for forming electrode active layers on a current collector comprises the steps of
forming an internal electrode active layer on a current collector with a first electrode slurry; and forming a wet film on the surface of the internal electrode active layer that faces away from the current collector with a second electrode slurry containing a pore-forming agent, followed by drying and rolling to form a superficial electrode active layer bonded to the internal electrode active layer.

17. The preparation method according to claim 16, **characterized in that** the second electrode slurry consists of several parts, in which the content of the pore-forming agent increases in gradient, and the several parts of the second electrode slurry are used to successively form films on the surface of the internal electrode active layer in order of the content of the pore-forming agent from low to high, so as to form the wet film.

18. A battery comprising a positive electrode and a negative electrode, **characterized in that** the positive electrode is an electrode according to any one of claims 1-10 or an electrode prepared by a method according to any one of claims 11-17, and the active material contained in an active layer of the electrode is a positive electrode material; and/or
the negative electrode is an electrode according to any one of claims 1-8 or an electrode prepared by a method according to any one of claims 9-15, and the active material contained in an active layer of the electrode is a negative electrode material.

19. A power consuming device, **characterized in that** the power consuming device comprises a battery according to claim 18, which is configured to supply electric energy.
